(19) Europäisches Patentamt / European Patent Office / Office européen des brevets

(11) **EP 2 166 739 B1**

(12) **FASCICULE DE BREVET EUROPEEN**

(45) Date de publication et mention de la délivrance du brevet:
**14.03.2018 Bulletin 2018/11**

(51) Int Cl.:
*H04M 11/06* (2006.01)   *H04M 7/00* (2006.01)
*H04L 29/06* (2006.01)   *H04L 12/28* (2006.01)
*H04M 1/76* (2006.01)

(21) Numéro de dépôt: **09170914.7**

(22) Date de dépôt: **22.09.2009**

(54) **Passerelle domestique à ré-injection**

Domestic gateway with reinjection

Haushaltsverbindung mit Einspritzung

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **23.09.2008 FR 0856380**

(43) Date de publication de la demande:
**24.03.2010 Bulletin 2010/12**

(73) Titulaire: **SAGEMCOM BROADBAND SAS**
**92500 Rueil Malmaison (FR)**

(72) Inventeur: **Bailly, François**
**91140, VILLEBON SUR YVETTE (FR)**

(74) Mandataire: **Le Guen-Maillet**
**5, place de Newquay**
**BP 70250**
**35802 Dinard Cedex (FR)**

(56) Documents cités:
**EP-A- 0 677 938         WO-A-2004/059961**
**FR-A- 2 856 216         US-A1- 2003 016 814**
**US-A1- 2005 069 029**

## Description

La présente invention concerne une passerelle domestique connectée à une ligne téléphonique conventionnelle, ladite passerelle étant prévue pour recevoir sur l'un de ses ports des signaux numériques émis via ladite ligne téléphonique conventionnelle par un équipement réseau dans une bande de fréquences déterminée et pour émettre sur ledit port et à destination dudit équipement réseau des signaux numériques dans une autre bande de fréquences déterminée, ladite passerelle étant prévue pour convertir lesdits signaux en signaux de téléphonie conventionnelle qui sont échangés avec un poste de téléphonie analogique.

Un système de téléphonie conventionnel est un système prévu pour transmettre sur une ligne de cuivre bifilaire des signaux analogiques de voix et des signalisations entre deux postes téléphoniques distants l'un de l'autre.

Pour cela, chaque poste téléphonique est connecté à un central téléphonique de raccordement qui, d'une part, fournit à ce poste les fonctionnalités matérielles et logicielles requises pour l'établissement, le maintien et la fin d'une communication avec un poste téléphonique distant et, d'autre part, qui établit la communication avec d'autres centraux téléphoniques lorsque le poste appelé n'appartient pas à la même boucle locale.

Les fonctionnalités matérielles fournies à chaque poste téléphonique sont assurées par une unité du central téléphonique connue sous le nom simplifié de SLIC (Subscriber Line Interface Circuit).

Cette unité SLIC fournit notamment les fonctions suivantes pour des lignes d'abonné pouvant atteindre 4 à 5 km.

Tout d'abord, l'unité SLIC assure une fonction d'alimentation de la ligne en continu et ce, pour alimenter le poste analogique distant (typiquement alimentation sous une tension de 48V avec un courant de quelques dizaines de mA).

L'unité SLIC assure également une fonction de génération de signal d'appel (signal de fréquence 20 à 60Hz et d'amplitude de l'ordre de 50 à 80V rms) et une fonction de transmission des signaux de voix. Cette dernière fonction regroupe notamment la présentation des impédances (complexes) permettant la meilleure adaptation à la ligne et aux terminaux, l'injection des signaux vocaux et le réglage des gains de transmission permettant une qualité de transmission optimum.

La bande passante limitée (300Hz-3400Hz) du réseau téléphonique commuté (RTC) et son rapport signal/bruit (de l'ordre de 40 dB) limitent la qualité du signal analogique transmis et limitent le débit de données transmises.

Afin d'accéder à des débits plus élevés permettant l'accès à de nouveaux services de voix et données tels que par exemple des services de voix de type VoIP (Voice Over Internet Protocol) et de données tel que l'accès à Internet, il est, le plus souvent, installé chez l'abonné, une passerelle domestique qui permet de recevoir et d'émettre des signaux analogiques relatifs à ces nouveaux services de type VoIP et de données haut débit mais qui permet également de recevoir les signaux analogiques relatifs au service de téléphonie conventionnel. Pour cela, il est également nécessaire, côté réseau, de prévoir l'acheminement de ces signaux analogiques sur le même réseau téléphonique existant.

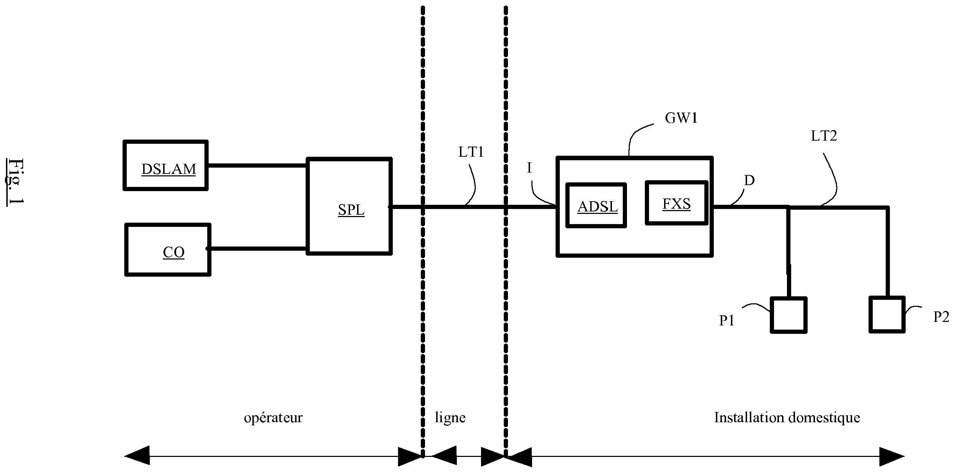

La Fig. 1 représente un schéma d'un système de téléphonie connu de l'état de la technique qui permet l'acheminement de données de voix via une passerelle domestique GW1. Le système SYST comporte un réseau téléphonique conventionnel (non représenté) prévu pour transporter des signaux de téléphonie conventionnelle jusqu'à un central téléphonique de raccordement CO qui comporte une unité SLIC, et un réseau large bande (non représenté) prévu pour transporter des signaux de données de VoIP et données haut débit jusqu'à un multiplexeur de ligne d'abonnés numériques DSLAM (*Digital Subscriber Line Access Multiplexer*).

Par la suite, pour des raisons de clarté, nous considèrerons un mode de réalisation préféré dans lequel les signaux relatifs à ces nouveaux services sont de type ADSL (*Asymmetric Digital Subscriber Line*). Cependant l'invention n'est pas limitée à ce type de raccordement en ADSL. Elle peut s'appliquer à des raccordements de type VDSL (*Very high bit-rate DSL*), de type optique en point à point ou de type optique en point multipoint ou de tout type de raccordement permettant l'échange de voix de type VoIP et de données haut débit.

L'ADSL est une technique de transmission utilisant la paire de fils d'une ligne téléphonique conventionnelle pour acheminer des signaux analogiques utilisant la bande de fréquences 25 KHz à 2,2 MHz.

La bande de fréquences ADSL proprement dite est séparée entre une bande de fréquences dite montante (utilisée pour la transmission d'un signal de l'abonné vers le réseau) définie entre 25 KHz et 138 KHz et une bande de fréquences dite descendante (utilisée pour la transmission d'un signal du réseau définie entre 138 KHz et 2,2MHz).

Les signaux analogiques qui transitent dans les deux sens (montant ou descendant) sur la ligne téléphonique conventionnelle sont alors définis comme la somme de porteuses élémentaires espacées de 4 KHz qui portent chacune une constellation de bits représentant les informations de voix et de données à transmettre.

L'ADSL transporte des trames ATM (Asynchronous Transfert Mode) dans lesquelles se trouvent encapsulées dans différents protocoles, par exemple PPPoA (PPP over ATM), IP (Internet Protocol) sur ATM, des trames Ethernet, des trames du type Ethernet issues de système de communication sans fils tel que le WiFi et des trames de voix compressées dans le cas des données relatives à un service VoIP.

L'acheminement simultané sur la paire de cuivre des signaux analogiques d'un service VoIP et des signaux analogiques de téléphonie conventionnelle est réalisé par un séparateur/mélangeur SPL (*splitter* en anglais) qui est relié par la ligne téléphonique conventionnelle à l'installation domestique de l'abonné.

Le multiplexeur DSLAM permet d'assurer via cette ligne une transmission ADSL (supportant différents services dont celui que l'on considèrera par la suite de type VoIP) aux abonnés connectés à partir de leur domicile sur un équipement de type passerelle domestique.

Plus précisément, le multiplexeur DSLAM récupère le trafic de données, issu de l'utilisation de la technologie ADSL (Internet haut débit, télévision par ADSL, VoIP...), transitant sur les lignes téléphoniques qui lui sont raccordées, après que ce trafic ait été séparé du trafic de voix analogique, grâce au séparateur SPL. Ensuite le multiplexeur DSLAM regroupe le trafic des différentes lignes qui lui sont raccordées et le redirige vers le réseau de l'opérateur ou du fournisseur d'accès selon le principe du multiplexage temporel où les données sont transportées en IP ou en ATM.

Concernant l'installation de l'abonné, il est connu que la passerelle domestique GW1 soit connectée en série sur la ligne téléphonique, qu'un, voire plusieurs, poste téléphonique P1 peut être connecté en amont de la passerelle domestique GW1 et qu'un, voire plusieurs, poste téléphonique P2 peut être connecté en aval.

Le poste téléphonique P2 est destiné à recevoir les données de voix acheminées soit par un service de type VoIP soit par un service de téléphonie conventionnelle.

Un filtre UF2, appelé également microfiltre, est relié en série et en amont du poste téléphonique P1. Chaque micro filtre UF2 a un gabarit de type passe-bas qui est prévu pour laisser passer les signaux à basse fréquence tels que l'alimentation en courant continu du poste téléphonique P1, les signaux de sonnerie (20 à 60 Hz) et les signaux dans la bande vocale (200 Hz à 4 KHz). Le gabarit de ce micro filtre est prévu pour atténuer le plus possible la bande de fréquences au dessus de 4 KHz (bande ADSL). Ce microfiltre a pour fonction d'éviter l'apparition de bruits parasites issus de la modulation ADSL qui seraient audibles dans la bande vocale et d'éviter au poste téléphonique P1, qui est à impédance d'entrée variable dans la bande ADSL, de désadapter l'impédance de 100 ohms de référence de l'accès ADSL et par là-même dégrader les performances de transmission ADSL.

L'introduction de la passerelle domestique GW1 en série sur la ligne téléphonique implique la séparation de la ligne téléphonique d'un point de vue électrique en une première partie LT1 qui relie le séparateur/mélangeur SPL à un port I de la passerelle GW1, et en une seconde partie LT2 qui relie un port D de la passerelle GW1, accessible par exemple sur connecteur RJ-11, au poste téléphonique P2. Il faut noter que la partie de ligne LT1 est alimentée par l'unité SLIC du central téléphonique de raccordement CO, et que la partie de ligne LT2 est alimentée par l'unité SLIC de la passerelle domestique GW1 comme on le verra par la suite.

Il est connu qu'une telle passerelle comporte une interface ADSL et une (ou plusieurs) interface FXS (Foreign Exchange Station) pour le raccordement de terminaux téléphoniques analogiques.

L'interface ADSL est constituée de moyens pour recevoir sur le port I des signaux ADSL émis via la partie de ligne LT1 par le séparateur/mélangeur SPL dans la bande de fréquences descendante et pour émettre sur le port I et à destination du séparateur/séparateur SPL des signaux ADSL dans la bande de fréquences montante. L'interface ADSL permet également d'extraire des signaux numériques contenant les données de voix et signalisation à partir des signaux ADSL descendants et de générer des signaux ADSL montants à partir de signaux numériques contenant des données de voix et signalisation.

L'interface FXS est constituée de moyens pour convertir des signaux numériques contenant des données de voix en signaux analogiques de téléphonie conventionnelle et réciproquement de convertir des signaux analogiques de téléphonie conventionnelle en signaux numériques.

Les signaux analogiques de téléphonie conventionnelle sont émis par la passerelle à destination du poste téléphonique P1 via le port D, dit port FXS, et réciproquement les signaux analogiques de téléphonie conventionnelle émis par le poste téléphonique P1 sont reçus via ce port FXS D.

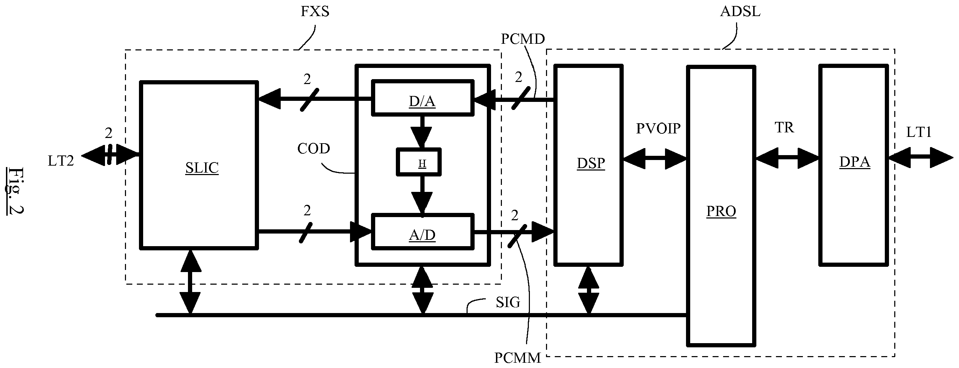

Le document D1, FR-A-2856216, décrit un dispositif adaptateur d'impédance d'un canal de transmission haut-débit de type xDSL. Un module d'ajustement permet d'insérer une impédance de terminaison dans la prise de raccordement, qui protège la liaison haut-débit contre les réflexions sur la ligne dues à la présence de branches ouvertes. Le dispositif adaptateur comporte des composants passifs pour adapter l'impédance de la ligne. La Fig. 2 représente un schéma illustrant le fonctionnement des interfaces FXS et ADSL de la passerelle domestique GW1.

La passerelle domestique GW1 comporte un ensemble de moyens largement connus de l'état de la technique tels qu'un processeur PRO, un calculateur dédié de signaux numériques DSP et une ou plusieurs mémoires et autres composants matériels programmables ou non qui assurent un certain nombre de fonctions.

L'interface FXS est, d'une part, en relation avec la partie de la ligne LT2 via le port FXS D et, d'autre part, avec l'interface ADSL qui est elle-même en relation avec la partie de la ligne LT1 via le port I. Les interfaces FXS et ADSL s'échangent des signaux numériques de voix référencés PCMM lorsqu'ils sont montants, c'est-à-dire émis par la passerelle à destination du séparateur/mélangeur SPL, et référencés PCMD lorsqu'ils sont descendants. Dans des réalisations classiques, ces signaux PCMM et PCMD peuvent avoir une structure en PCM (Pulse Code Modulation) à 64 kbits/s.

Les interfaces FXS et ADSL acheminent également des informations dites de signalisation SIG pour la gestion d'appel.

L'interface FXS comporte un ensemble de moyens largement connus de l'état de la technique tels que un ou plusieurs composants matériels programmables intégrant ou non de la mémoire qui assurent un certain nombre de fonctions. Ces moyens font appel au processeur PRO et optionnellement au calculateur dédié de signaux numériques DSP si ces fonctions ne sont pas assurées par le processeur PRO.

L'interface FXS de la passerelle met en oeuvre des moyens pour assurer les fonctions classiques de téléphonie conventionnelle qui permettent de raccorder le poste téléphonique P2 à la passerelle GW1 via la partie de la ligne LT2.

Les fonctions mises en oeuvre par les moyens de l'interface FXS se sub-divisent en général en deux blocs fonctionnels appelés communément bloc SLIC et bloc de codage - décodage COD.

Le bloc SLIC fournit notamment les fonctions suivantes pour des lignes d'abonné de l'installation domestique dont les longueurs sont typiquement de quelques dizaines de mètres.

Tout d'abord, le bloc SLIC assure une fonction d'alimentation de la ligne LT2 en continu pour que les postes analogiques d'abonnés connectés à l'installation domestique soient alimentés. Le bloc SLIC assure aussi une fonction de génération de signal d'appel (signal dit de sonnerie de fréquence 20 à 60Hz et d'amplitude de l'ordre de 30 à 60V rms à destination des postes analogiques d'abonnés) et une fonction de transmission des signaux de voix. Cette dernière fonction inclut notamment le passage 2 fils / 4 fils, qui recouvre la transmission de voix bidirectionnelle sur la partie de la ligne LT2 reliant un port FXS de la passerelle et un poste téléphonique, la transmission unidirectionnelle en émission (c'est-à-dire à partir de l'entrée de l'interface FXS vers le bloc de codage COD via le bloc SLIC, et la transmission unidirectionnelle en réception (c'est-à-dire du bloc de codage COD vers la sortie de l'interface FXS via le bloc SLIC).

Les blocs SLIC et COD assurent également le support et la transmission des signaux dans les sens émission et réception ainsi que le traitement de ces signaux. En particulier, le bloc de codage COD assure la conversion des signaux analogiques montants en signaux numériques PCMM et la conversion des signaux numériques descendants PCMD en signaux analogiques. Le bloc de codage COD assure également le réglage des gains des signaux montants et descendants.

L'interface FXS assure de plus la reconnaissance de la signalisation de ligne c'est-à-dire la gestion des signaux SIG qui permettent de détecter le décrochage, le raccrochage, le signal de rappel d'enregistreur, et la reconnaissance de la numérotation décimale et de la numérotation multifréquence.

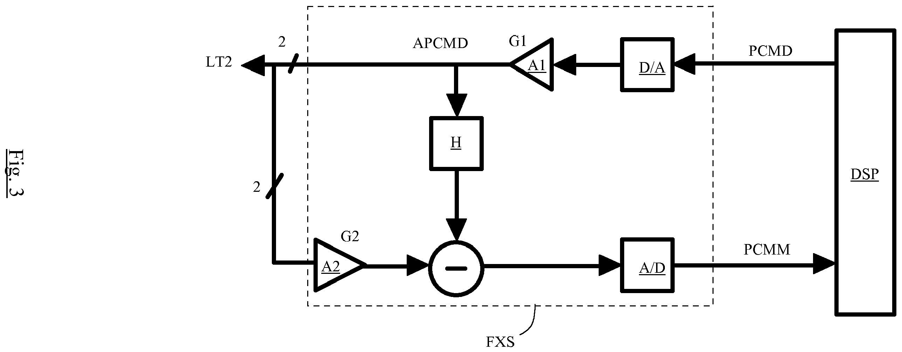

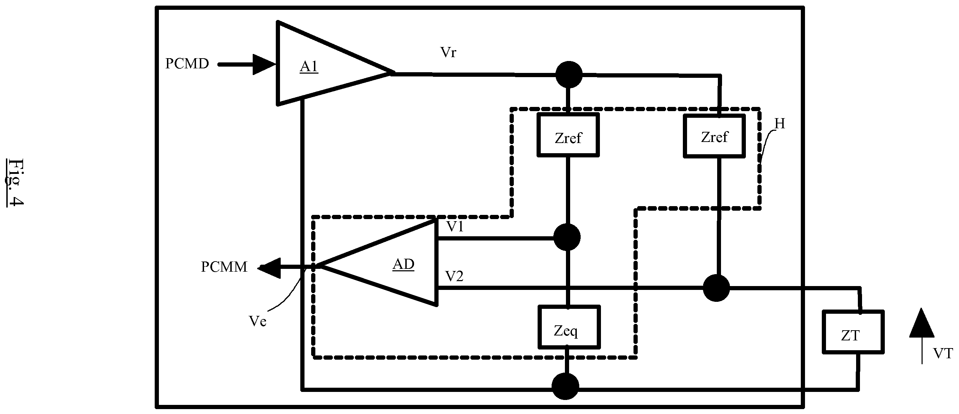

L'interface FXS assure aussi, d'une part, l'adaptation en impédance de la passerelle avec les postes téléphoniques qui sont reliés à elle via la ligne téléphonique et, d'autre part, la minimisation de l'écho local tel qu'expliqué en relation avec les Fig. 3 et 4.

L'interface ADSL comporte un ensemble de moyens largement connus de l'état de la technique tels qu'une unité DPA (Data Pump ADSL) et un ou plusieurs composants matériels programmables intégrant ou non de la mémoire qui assurent un certain nombre de fonctions. Ces moyens font appel au processeur PRO et optionnellement au calculateur dédié de signaux numériques DSP si ces fonctions ne sont pas assurées par le processeur PRO.

L'interface ADSL échange les signaux PCMD et PCMM avec l'interface FXS, convertit les signaux PCMM en paquets de voix PVOIP et réciproquement des paquets de voix PVOIP en signaux PCMD. Les paquets de voix PVOIP sont généralement conformes au protocole RTP (Real Time Protocol) qui peuvent être encapsulés dans une trame TR de type ATM puis les trames TR sont à leur tour encapsulées dans des trames ADSL via l'unité DPA (Data Pump ADSL).

L'interface ADSL assure la compression (optionnelle) et la décompression de signaux de voix. Par exemple, le protocole G.729 est utilisé pour abaisser le débit des signaux PCMM (64 Kbis/s) à 8 Kbit/s (signaux PVOIP) ou réciproquement pour augmenter le début des paquets de voix PVOIP (8kbit/s) à 64 Kbit/s (signaux PCMD).

L'interface ADSL assure également la paquettisation des signaux de voix c'est-à-dire le regroupement des échantillons de voix par paquet PVOIP qui correspondent, généralement, à 10, 20 ou 40 ms de temps de parole.

L'interface ADSL assure aussi la gestion des dispersions de temps de transmission dans le réseau Internet (qui n'est pas synchrone contrairement au réseau téléphonique commuté).

L'interface ADSL assure enfin la réception des signaux ADSL descendants, leur démodulation à des fins d'obtenir des trames TR et réciproquement la modulation des trames TR sur des porteuses élémentaires afin de former des signaux ADSL qui sont alors émis à destination du séparateur/mélangeur SPL via la partie de la ligne LT1.

Le fonctionnement de la passerelle domestique GW1 est le suivant.

Lorsque qu'un signal analogique de téléphonie conventionnelle est émis par le poste P2 via la partie de la ligne LT2, ce signal est numérisé via le bloc de codage COD pour obtenir le signal PCMM. Le signal PCMM est alors mis en paquets PVOIP qui sont alors encapsulés dans des trames TR, trames qui à leur tour sont encapsulées dans des trames ADSL via l'unité DPA puis émis à destination du séparateur/mélangeur SPL. Concernant les signaux de signalisation SIG montants, c'est-à-dire les signaux de signalisation de la partie de la ligne LT2, les signaux sont transportés selon un protocole d'appel de type MGCP ou H.323 ou SIP (Session Initiation Protocol) avant d'être encapsulés dans des trames TR puis ADSL. Les trames ADSL sont alors modulées sur porteuses à des fins d'émission vers le séparateur/mélangeur SPL.

Lorsqu'un signal ADSL est reçu par la passerelle GW1, le signal est démodulé. Des trames TR sont alors extraites des trames ADSL via l'unité DPA, puis des paquets de voix PVOIP sont extraits des trames TR via l'interface ADSL. Le signal PCMD est alors formé à partir des paquets PVOIP et le signal PCMD est converti en un signal analogique de téléphonie conventionnelle via l'interface FXS avant d'être émis sur la partie de la ligne LT2.

On peut noter que fonctionnellement les blocs SLIC et COD ont été décrits séparément. Cependant, les moyens mis en oeuvre pour le réglage des gains et la minimisation de l'écho sont, le plus souvent, fortement couplés.

La Fig. 3 représente un schéma des moyens mis en oeuvre par l'interface FXS pour le réglage des gains des signaux émis et reçus et pour la minimisation de l'écho local.

Un signal numérique PCMD est converti par le convertisseur D/A avant d'être amplifié par un amplificateur A1 de valeur de gain prédéfinie G1. Le signal analogique APCMD ainsi obtenu est alors émis sur la partie de la ligne LT2 à destination du poste téléphonique P2. De manière réciproque, un signal analogique de téléphonie conventionnelle issu du poste P2 reçu via la partie de la ligne LT2 est amplifié par un amplificateur A2 de valeur de gain prédéfinie G2 avant d'être converti par le convertisseur A/D.

Le principe de minimisation de l'écho local consiste à minimiser l'écho d'un signal descendant, c'est-à-dire à s'assurer qu'un signal réception issu d'un poste distant ne soit pas réémis dans la chaîne émission à un niveau trop important et créer ainsi un écho, voire un larsen qui s'ajouterait alors au signal émis par le poste local. La fonction de minimisation d'écho est schématiquement représentée par une unité H.

Plus précisément, afin d'éviter qu'un signal analogique de téléphonie conventionnelle reçu via la partie de la ligne LT2 ne se mélange au signal analogique APCMD, provoquant ainsi un écho sur le poste distant à l'origine du signal APCMD, le signal APCMD est retranché au signal analogique reçu via l'unité H dont le rôle est de minimiser cet écho local.

La Fig. 4 représente un schéma illustrant l'adaptation en impédance de la passerelle domestique GW1 avec un poste téléphonique relié à cette passerelle ainsi que le principe de minimisation de l'écho local.

La passerelle GW1 présente une impédance notée Zref à la ligne et plus précisément à la partie de la ligne LT2 selon la Fig. 2. Le choix de cette impédance est dépendant des opérateurs qui, historiquement, la fixaient à 600 Ohms ou 900 Ohms et qui est maintenant souvent spécifiée comme étant une impédance complexe variable en fonction de la fréquence.

Chaque poste téléphonique, en l'occurrence le poste P2, qui est connecté à un port FXS de la passerelle présente également à la ligne une impédance ZT dont le comportement est également préalablement fixé (également un choix des opérateurs pouvant être par exemple du type 600 Ohm, 900 Ohm ou complexe).

Ainsi, l'impédance de charge vue du port FXS de la passerelle est l'impédance résultant de la mise en série de l'impédance ZT et de l'impédance ZLT2 de la partie de la ligne LT2.

En pratique, les passerelles domestiques actuelles telles que la passerelle GW1 illustrée à la Fig. 1 sont installées avec des parties de ligne LT2 de longueurs faibles, typiquement de l'ordre de quelques dizaines de mètres, du fait de la proximité du poste téléphonique P2 et de la passerelle GW1. De ce fait, l'impédance ZLT2 de la partie de la ligne LT2 n'a pas d'incidence notable sur l'impédance de charge qui est alors considérée égale à l'impédance ZT qui est fixée par une impédance interne au poste téléphonique de valeur fixe et définie au préalable.

Ainsi, lors de l'utilisation dite en mode non réinjecté de la passerelle GW1, l'adaptation en impédance de la passerelle GW1 avec un poste téléphonique tel que le poste P2 est effective et déterministe puisque l'impédance Zref côté passerelle et l'impédance ZT côté poste téléphonique sont connues. La désadaptation d'impédance est alors minimisée car l'impédance ZLT2 est faible par rapport à l'impédance ZT.

En réception, le signal PCMD est reçu à l'entrée d'un amplificateur A1. Le signal amplifié de niveau de tension Vr alimente alors l'unité H qui est ici schématisée par un montage en pont d'impédance destiné à alimenter un amplificateur différentiel AD de gain variable GD. Ce pont d'impédance fait intervenir l'impédance Zref et une impédance Zeq, dite d'équilibrage, qui est égale à l'impédance théorique externe vue d'un port FXS, c'est-à-dire à l'impédance équivalente que l'ensemble ligne plus poste téléphonique présente à la ligne. L'impédance Zeq est une impédance interne à la passerelle GW1 dont la valeur est fixe et égale à l'impédance de charge c'est-à-dire en pratique égale à l'impédance ZT du poste téléphonique si l'impédance ZLT2 de la partie de la ligne LT2 est négligeable.

Mathématiquement parlant, le niveau tension VT, aux bornes du poste est donné par l'équation suivante :

$$VT = \frac{ZT}{ZT + Zref} xVr$$

Concernant le principe de minimisation de l'écho local, l'association de l'amplificateur différentiel AD et du pont d'impédance permet la suppression du signal de niveau *Ve* qui correspondrait au niveau de l'écho qui serait ajouté à un signal PCMM émis. Pour cela, l'amplificateur différentiel AD dont la sortie est ce signal de niveau *Ve* est alimenté par deux signaux de niveaux respectifs *V*1 (issu du pont diviseur interne Zref / Zeq) et V2 (issu du pont diviseur interne Zref/ ZT) donnés par les équations suivantes :

$$V1 = \frac{Zeq}{Zref + Zeq} x Vr$$

$$V2 = \frac{ZT}{Zref + ZT} x Vr$$

Ainsi, le niveau de tension Ve correspondant à l'écho est alors donné par :

$$Ve = G x Vr x \left( \frac{Zeq}{Zref + Zeq} - \frac{ZT}{Zref + ZT} \right)$$

L'écho est alors parfaitement supprimé lorsque Zeq = ZT.

Ainsi, en pratique, l'impédance d'équilibrage interne Zeq doit être préalablement choisie égale à l'impédance ZT vue de l'accès FXS.

La passerelle GW1 permet donc de recevoir sur l'un de ses ports des signaux émis via une ligne téléphonique conventionnelle par un équipement réseau dans une bande de fréquences déterminée et d'émettre sur ce port et à destination dudit équipement réseau des signaux dans une autre bande de fréquences. Une telle passerelle est également prévue pour convertir lesdits signaux en signaux de téléphonie conventionnelle qui sont échangés avec un poste de téléphonie analogique connecté à ladite ligne téléphonique.

La passerelle GW1 permet également à un abonné de recevoir un service de type VoIP dans des conditions de transmission satisfaisantes du fait de l'adaptation en impédance effective et déterministe et de la minimisation de l'écho local lorsque cette passerelle est montée en série sur la ligne téléphonique conventionnelle de l'installation domestique.

Cependant, une telle installation de passerelle domestique, qui est généralement faite par l'abonné, est délicate car elle nécessite de la part de l'abonné de connecter correctement son (ou ses) poste(s) sur les ports FXS dédiés de la passerelle et de s'assurer que la passerelle est bien en série avec la ligne de son installation domestique. De plus, ce type d'installation ne permet pas de réutiliser le câblage existant de l'installation domestique. Les postes préexistants installés dans différentes pièces d'habitation de l'abonné ne peuvent pas être raccordés aisément sur la passerelle domestique d'où une forte demande de la part des opérateurs pour remédier à cet inconvénient.

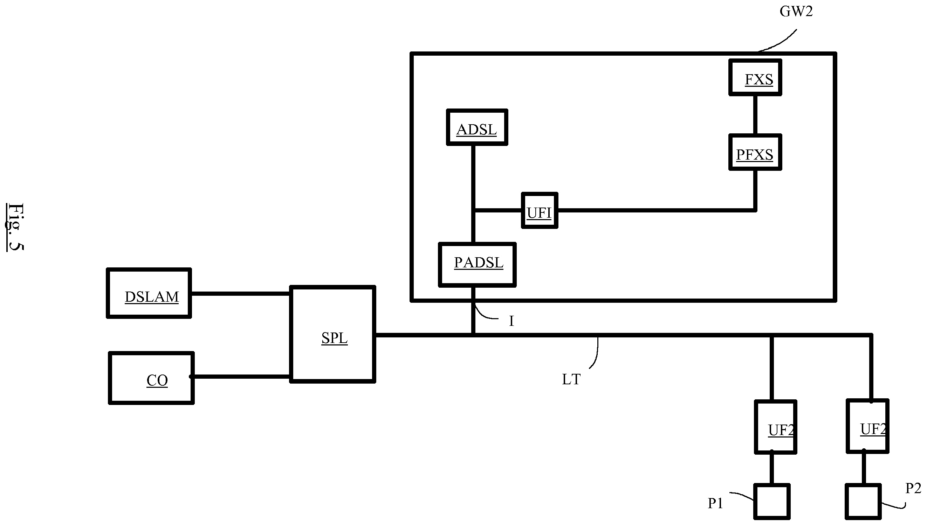

D'où l'apparition des passerelles domestiques dites à ré-injection représentées schématiquement à la Fig. 5.

La ré-injection consiste à ce que les signaux analogiques de téléphonie conventionnelle issus de signaux ADSL soient accessibles à partir d'un même port I par lequel ces signaux ADSL sont échangés avec le séparateur/mélangeur SPL. L'installation d'une telle passerelle GW2 est ainsi grandement facilitée. En effet, elle évite une modification du câblage de l'installation domestique car la passerelle est connectée en parallèle sur la ligne téléphonique LT et ce en amont ou en aval des postes téléphoniques P1 et P2 préexistants chez l'abonné. Ainsi, l'installation par l'abonné ne consiste plus qu'à connecter la passerelle GW2 selon ce port I à la ligne LT et à insérer un microfiltre UF2 en série avec chacun de ses postes connectés sur la ligne LT.

Comme indiqué à la Fig. 5, la passerelle domestique GW2 comporte un filtre UF1 dont la fonction est d'isoler en impédance les interfaces FXS et ADSL. En d'autres termes, le filtre UF1 a un gabarit de type passe-bas du type de celui des microfiltres UF2, évitant ainsi que les signaux ADSL ne perturbent les signaux vocaux de téléphonie conventionnelle (transitant par l'interface FXS) c'est-à-dire que l'interface ADSL ne perturbe pas l'impédance de l'interface FXS vue par un poste téléphonique, et réciproquement, que les signaux de téléphonie conventionnelle ne perturbent pas les signaux ADSL (transitant par l'interface ADSL), c'est-à-dire que l'interface FXS ne perturbe pas l'impédance de l'interface ADSL.

On peut noter également que les interfaces FXS et ADSL sont protégées contre les surcharges électriques qui pourraient subvenir sur la ligne LT grâce aux unités PADSL et PFXS. Ce type de surcharges électriques peut avoir pour cause des surcharges impulsionnelles d'origine atmosphérique (orage) ou des surcharges plus longues dues à l'induction de lignes électriques parallèles à la ligne d'abonné ou encore des contacts directs de perturbateurs avec la ligne d'abonné LT.

Les passerelles domestiques à ré-injection de l'état de la technique, dont un schéma est donné à la Fig. 5, bien que permettant une installation plus aisée, présentent néanmoins deux inconvénients majeurs lors de leur configuration.

Tout d'abord, le fait que la passerelle domestique GW2 est connectée en parallèle sur la ligne LT fait que la longueur de la ligne LT peut être de quelques centaines de mètres à plusieurs kilomètres au contraire de la partie de la ligne LT2 de l'installation de la Fig. 1 dont la longueur était faible (de 10 m à 150 m typiquement) quelle que soit la distance entre le séparateur/mélangeur SPL et le domicile de l'abonné. Ainsi, l'impédance ZLT de la ligne ne peut plus être considérée en pratique comme n'ayant plus d'incidence sur l'impédance de charge du port FXS de la passerelle.

La longueur, et donc l'impédance de la ligne LT étant variable selon les positions relatives du séparateur/mélangeur SPL et du domicile de l'abonné, il n'est par conséquent pas possible, pour l'opérateur, de déterminer précisément au préalable l'impédance de charge vue par la passerelle à l'interface FXS, impédance qui conditionne le choix de l'impédance d'équilibrage interne, car cette impédance est maintenant également fonction de l'impédance ZLT de la ligne LT qui est inconnue lors de la fabrication de la passerelle. L'influence de l'impédance ZLT sur l'impédance de charge et, par conséquent, la désadaptation en impédance de la passerelle avec les postes téléphoniques est d'autant plus importante que l'installation domestique d'un abonné est éloignée du central téléphonique de raccordement. Cette désadaptation entraîne une baisse des niveaux d'émission et de réception, et surtout un écho local plus important qui induit une gène notable dans la qualité de la transmission téléphonique.

L'installation d'une passerelle domestique à ré-injection nécessite également que l'abonné vérifie que sa ligne téléphonique LT soit dégroupée. En effet, dans le cas où la ligne n'est pas dégroupée, cette ligne LT est alimentée par deux sources dont l'une est située dans l'unité SLIC du central téléphonique de raccordement et l'autre dans le bloc SLIC de la passerelle GW2. La ligne LT ne pouvant être alimentée simultanément par deux sources différentes, il est nécessaire que l'abonné se renseigne auprès de son opérateur si sa ligne est dégroupée et ce avant de connecter sa passerelle à la ligne. Ce qui va à l'encontre d'une installation facile d'une telle passerelle domestique et au désengorgement des services d'appel des opérateurs.

Le problème résolu par la présente invention est donc de faciliter la configuration d'une passerelle domestique à ré-injection en minimisant les interventions de l'abonné et de l'opérateur.

A cet effet, la présente invention concerne une passerelle domestique telle que décrite précédemment, qui comporte des moyens pour déterminer l'état de dégroupage de la ligne téléphonique et des moyens, dits de ré-injection conditionnelle, pour échanger les signaux de téléphonie conventionnelle issus de signaux numériques de type ADSL avec un poste téléphonique via un premier port lorsque la ligne a été dégroupée et pour échanger lesdits signaux de téléphonie conventionnelle avec ledit poste téléphonique via un port, dit second, autre que ledit premier port lorsque la ligne n'est pas dégroupée.

Une telle passerelle évite donc à l'abonné de devoir se renseigner au préalable auprès de son opérateur si la ligne téléphonique de son domicile est dégroupée ou pas. L'abonné n'a qu'à connecter la passerelle à son installation domestique qui basculera ou pas dans le mode de fonctionnement ré-injection selon l'état de dégroupage de la ligne déterminé automatiquement par la passerelle.

Selon un mode de réalisation de la passerelle qui comporte une interface FXS, l'un desdits moyens de re-direction conditionnelle est un relais qui est activé lorsque la ligne est dégroupée et qui établit alors une liaison interne à la passerelle entre ladite interface FXS et ledit premier port afin que lesdits signaux de téléphonie conventionnelle soient échangés avec le poste téléphonique via ledit premier port, relais qui est désactivé lorsque la ligne n'est pas dégroupée et qui établit alors une liaison interne à la passerelle entre ladite interface FXS et ledit second port pour que lesdits signaux de téléphonie conventionnelle soient échangés avec le poste téléphonique via ledit second port.

Ce mode de réalisation est particulièrement simple à mettre en oeuvre. Le relais est par exemple piloté par un programme qui est enregistré dans un élément de la passerelle et exécuté par des moyens classiques tels que le processeur PRO.

Selon un mode de réalisation, lesdits moyens pour déterminer l'état de dégroupage comportent un moyen pour activer, de préférence cycliquement, ledit relais et un moyen pour mesurer le niveau de la tension électrique sur ladite ligne téléphonique. La ligne est alors déclarée comme étant dégroupée si le niveau de tension électrique mesuré est inférieur à un seuil prédéterminé (pour s'affranchir de tensions parasites pouvant se trouver sur la ligne) et elle est déclarée comme étant non dégroupée dans le cas contraire.

Selon un mode de réalisation, la passerelle comporte un indicateur visuel de l'état de dégroupage de la ligne téléphonique.

Ce mode est particulièrement avantageux car il informe l'abonné de l'état de dégroupage de sa ligne et lui permet ainsi de savoir si les données de voix issues des signaux ADSL en mode VoIP peuvent être reçues en connectant son poste téléphonique sur la ligne téléphonique via le premier port ou si il doit connecter son poste sur le second port. De plus, dans le cas où la ligne est nouvellement dégroupée, l'abonné en est de suite informé et peut alors modifier le branchement de son poste.

Selon un mode de réalisation, la passerelle comportant en interne une impédance d'équilibrage présentée à la ligne de valeur prédéfinie et des amplificateurs à gains variables destinés à amplifier les signaux tant en émission qu'en réception, la passerelle comporte un moyen pour modifier la valeur de ladite impédance d'équilibrage et des gains desdits amplificateurs selon les caractéristiques de ladite ligne téléphonique.

Les caractéristiques d'une ligne de cuivre sont généralement données par unité de longueur. Une ligne se caractérise notamment par une inductance et une capacité par unité de longueur qui sont dépendantes de son type de construction. Ainsi, connaissant la longueur de la ligne et ses valeurs d'inductance et de capacité par unité de longueur il est possible d'en déduire l'impédance complexe de la ligne.

Selon un mode de réalisation, ledit moyen pour modifier la valeur de l'impédance d'équilibrage et les gains desdits amplificateurs permet d'obtenir la longueur de la partie de la ligne reliant ledit équipement réseau audit premier port de la passerelle, la valeur de ladite impédance d'équilibrage et les gains desdits amplificateurs étant alors modifiés selon la longueur de la partie de la ligne ainsi obtenue.

Selon un autre de ses aspects, l'invention concerne un procédé de configuration d'une passerelle domestique connectée en parallèle à une ligne téléphonique, ladite passerelle étant prévue pour recevoir sur l'un de ses ports, dit premier, des signaux numériques de type ADSL émis via ladite ligne téléphonique conventionnelle par un équipement réseau dans une bande de fréquences déterminée et pour émettre sur ledit premier port et à destination dudit équipement réseau des signaux numériques de type ADSL dans une autre bande de fréquences déterminée, ladite passerelle étant prévue pour convertir lesdits signaux en signaux de téléphonie conventionnelle qui sont échangés avec un poste de téléphonie analogique connecté à ladite ligne téléphonique. Le procédé comporte une étape de détermination de l'état de dégroupage de ladite ligne téléphonique, suivie d'une étape, dite de ré-injection conditionnelle, au cours de laquelle, dans le cas où la ligne est déterminée comme étant dégroupée, lesdits signaux de téléphonie conventionnelle sont échangés avec ledit poste téléphonique via ledit premier port et dans le cas où la ligne est déterminée comme n'étant pas dégroupée, lesdits signaux de téléphonie conventionnelle sont échangés avec ledit poste téléphonique via un port, dit second, autre que ledit premier port.

Selon un mode de réalisation, ladite étape de détermination de l'état de dégroupage de ladite ligne téléphonique suivie de ladite étape de ré-injection conditionnelle sont exécutées lors de la première utilisation de la passerelle.

Selon une variante, ladite étape de détermination de l'état de dégroupage de ladite ligne téléphonique suivie de ladite étape de ré-injection conditionnelle sont exécutées cycliquement.

Dans le cas où la passerelle comporte une interface FXS et un relais R qui est activé lorsque ladite ligne est dégroupée et qui établit alors une liaison interne à ladite passerelle entre ladite interface et ledit premier port afin que lesdits signaux de téléphonie conventionnelle soient échangés avec ledit poste téléphonique via ledit premier port, relais qui est désactivé lorsque ladite ligne n'est pas dégroupée et qui établit alors une liaison interne entre ladite interface et ledit second port, au cours de ladite étape de détermination de l'état de dégroupage de ladite ligne téléphonique, ledit relais est activé et une tension électrique sur ladite ligne téléphonique est mesurée, ladite ligne étant alors déterminée comme étant dégroupée si aucun niveau de tension n'est mesuré et elle est déterminée comme étant non dégroupée dans le cas contraire.

Selon une autre caractéristique du procédé, la passerelle comportant en interne une impédance d'équilibrage présentée à la ligne de valeur prédéfinie et des amplificateurs à gains variables destinés à amplifier les signaux tant en émission qu'en réception, le procédé comporte une étape de modification de la valeur de ladite impédance d'équilibrage et des gains desdits amplificateurs selon les caractéristiques de ladite ligne téléphonique, étape qui n'est exécutée que lorsque la ligne a été préalablement déterminée comme étant dégroupée.

Selon un autre de ses aspects, l'invention concerne un programme stocké sur un support d'informations, ledit programme comportant des instructions permettant de mettre en oeuvre le procédé ci-dessus, lorsqu'il est chargé et exécuté par une passerelle domestique décrite ci-dessus.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:

La Fig. 1 représente un schéma d'un système de téléphonie connu de l'état de la technique qui permet l'acheminement de données de voix via une passerelle domestique.

La Fig. 2 représente un schéma illustrant le fonctionnement des interfaces FXS et ADSL de la passerelle domestique de la Fig.1.

La Fig. 3 représente un schéma des moyens mis en oeuvre par une interface FXS pour le réglage des gains des signaux émis et reçus et pour la minimisation de l'écho.

La Fig. 4 représente un schéma illustrant l'adaptation en impédance de la passerelle domestique de la Fig. 1 avec un poste téléphonique relié à cette passerelle ainsi que le principe de minimisation de l'écho local.

La Fig. 5 représente un schéma d'un système de téléphonie connu de l'état de la technique qui permet l'acheminement de données de voix via une passerelle domestique à ré-injection.

La Fig. 6 représente un schéma d'une passerelle domestique à ré-injection selon la présente invention.

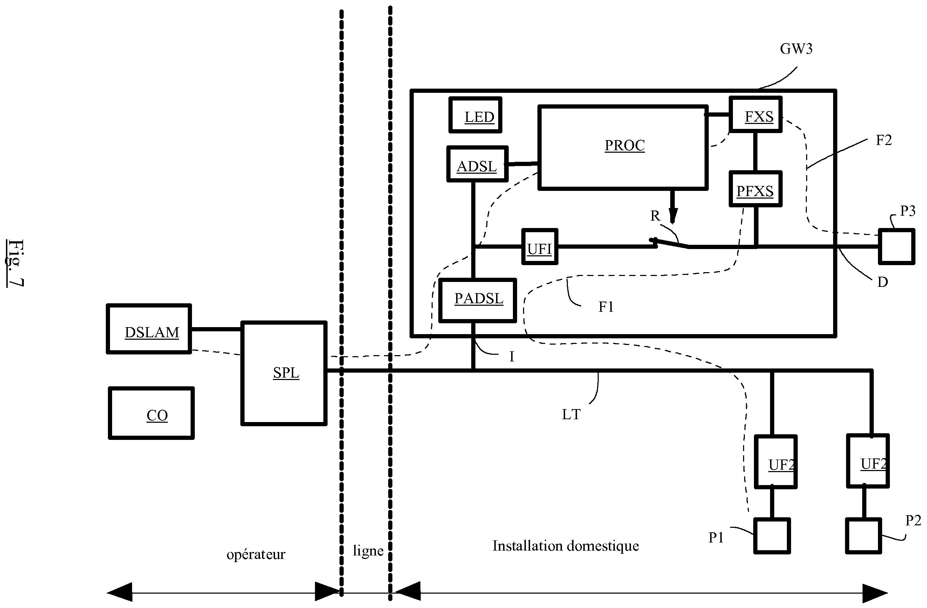

La Fig. 7 représente un schéma de fonctionnement de la passerelle domestique de la Fig. 6 en mode re-injecté.

La Fig. 8 représente un schéma de fonctionnement de la passerelle domestique de la Fig. 6 en mode re-injecté.

La Fig. 9 représente un schéma illustrant la modification de la valeur de l'impédance d'équilibrage et des gains d'amplification internes d'une passerelle domestique à ré-injection.

La Fig. 10 représente un diagramme des étapes d'un procédé de configuration d'une passerelle domestique à ré-injection selon la présente invention.

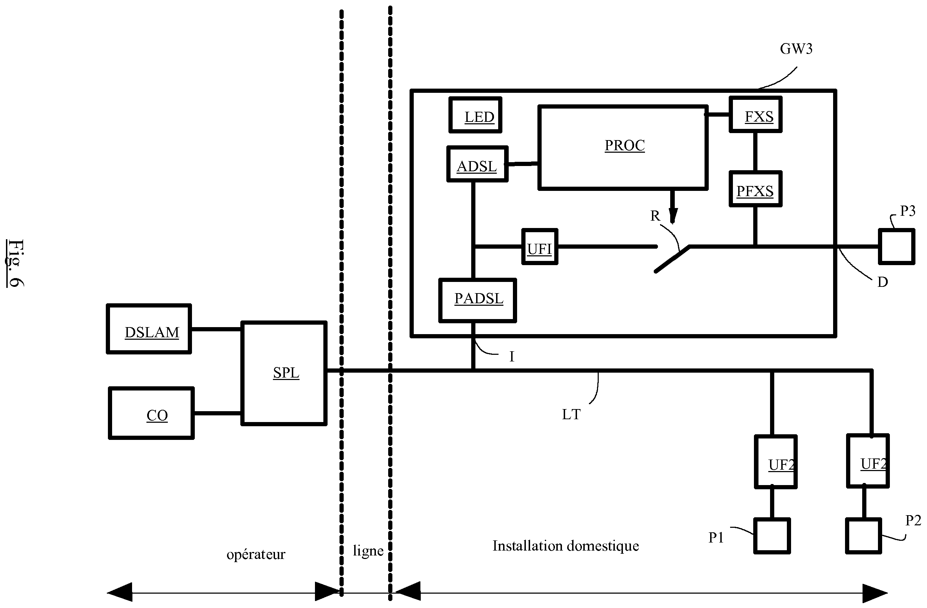

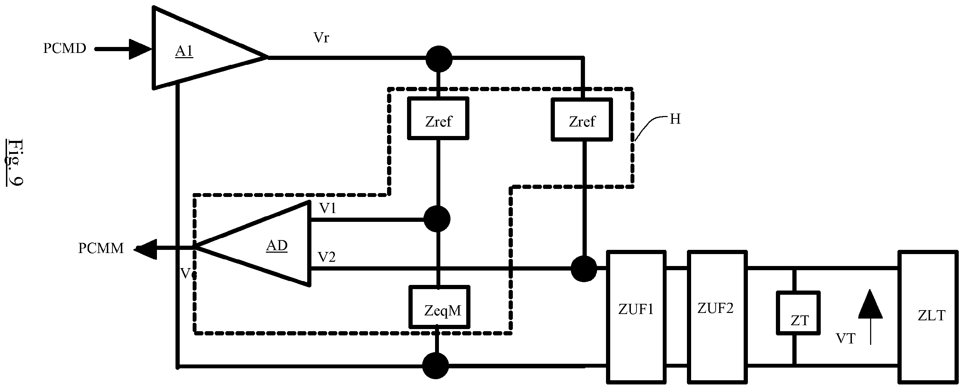

Par la suite, un mode de réalisation de la passerelle domestique selon la présente invention est décrit en relation avec les Figs. 6 et 9. Les références des éléments des Fig. 6 et 9 qui sont identiques aux références des Fig. 4 et 5 désignent les mêmes éléments.

La Fig. 6 représente un schéma d'une passerelle domestique à ré-injection GW3 selon la présente invention.

La passerelle domestique GW3 est connectée en parallèle à la ligne téléphonique LT et est prévue pour fonctionner selon un service de type VoIP ou d'un service de téléphonie conventionnelle utilisant le central téléphonique CO.

La passerelle GW3 est prévue pour recevoir sur un port I des signaux ADSL émis via la ligne téléphonique conventionnelle LT par un équipement réseau, en l'occurrence le séparateur/mélangeur SPL et ce dans la bande de fréquences descendante et pour émettre sur le port I et à destination du séparateur/mélangeur SPL des signaux ADSL dans la bande de fréquences montante. De plus, la passerelle domestique GW3 est prévue pour convertir lesdits signaux ADSL en signaux de téléphonie conventionnelle qui sont échangés avec un poste de téléphonie analogique connecté à la ligne téléphonique LT.

De plus, la passerelle GW3 comporte des amplificateurs A1 et A2 dont les valeurs de gains G1 et G2 sont variables. Ces valeurs peuvent être, par exemple, déterminées par un programme exécuté par exemple par le calculateur dédié de signaux numériques DSP ou par des fonctions intégrées au bloc SLIC de l'interface FXS.

Selon une caractéristique de l'invention, la passerelle domestique GW3 comporte des moyens pour déterminer l'état de dégroupage de la ligne téléphonique LT et des moyens, dits de ré-injection conditionnelle, pour, d'une part, échanger les signaux de téléphonie conventionnelle issus des signaux ADSL avec un poste téléphonique, en l'occurrence les postes P1 et P2, via le port I lorsque la ligne téléphonique LT est dégroupée et, d'autre part, échanger lesdits signaux de téléphonie avec un poste téléphonique, en l'occurrence le poste P3, via un port D lorsque la ligne n'est pas dégroupée.

Selon le mode de réalisation, représenté à la Fig. 6, l'un des moyens de re-direction conditionnelle est un relais R qui est monté en série entre le filtre UF1 et l'unité de protection PFXS. Le relais R est, par exemple, piloté par un programme qui est, par exemple, mémorisé dans une mémoire de la passerelle et exécuté par le processeur PRO interne à la passerelle GW3.

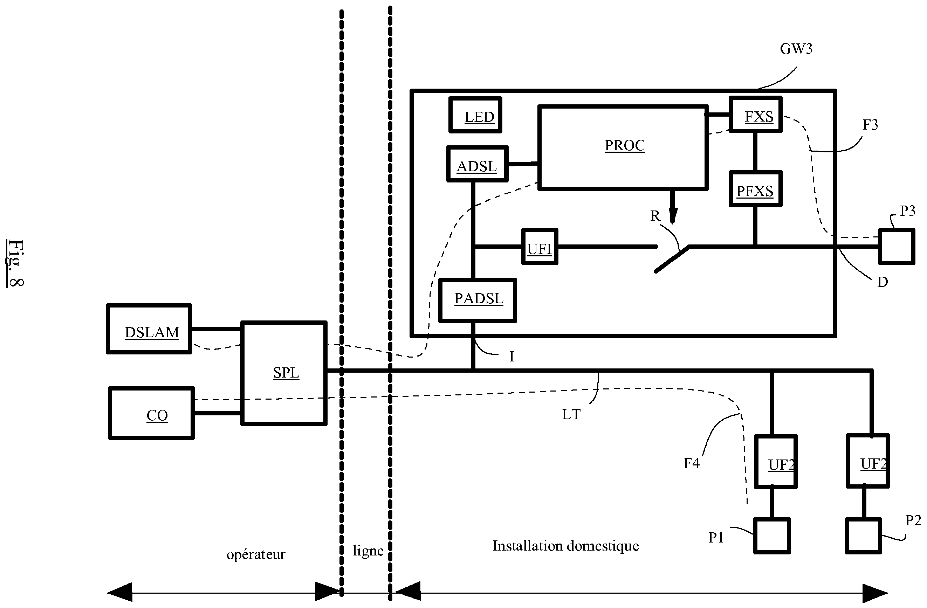

Le relais R est activé lorsque la ligne LT est dégroupée telle que illustré à la Fig. 8. Ce relais, lorsqu'il se trouve activé, établit une liaison interne à la passerelle entre l'interface FXS et le port I afin que les signaux de téléphonie conventionnelle issus de l'interface FXS soient émis à destination de l'un des postes téléphoniques P1 ou P2 via le port I. Réciproquement, lorsque le relais R est activé et que des signaux de téléphonie conventionnelle sont émis par l'un des postes P1 ou P2, reçus par la passerelle via le port I et traités par l'interface FXS puis par l'interface ADSL, ils génèrent alors des signaux ADSL montants qui sont émis à destination du séparateur/mélangeur SPL via le port I. Le port I est alors un port FXS. L'acheminement des ces signaux est schématiquement représenté sur la Fig. 8 par la flèche en italique référencée F1.

On peut noter que dans ce cas, des signaux de téléphonie conventionnelle peuvent être émis à destination du poste téléphonique P3 via un port D. L'acheminement de ces signaux est schématiquement représenté sur la Fig. 8 par la flèche en italique référencée F2. Réciproquement, lorsque des signaux de téléphonie conventionnelle sont émis par le poste P3, reçus par la passerelle via le port D et traités par l'interface FXS puis par l'interface ADSL, ils génèrent alors des signaux ADSL montants qui sont émis à destination du séparateur/mélangeur SPL via le port I.

Lorsque la ligne LT n'est pas dégroupée telle que illustré à la Fig. 9, le relais R est désactivé, c'est-à-dire ouvert tel que représenté notamment sur la Fig. 6. Dans ce cas, une autre liaison interne à la passerelle GW3 est établie entre l'interface FXS et un port D pour que les signaux de téléphonie conventionnelle issus de l'interface FXS soient émis à destination du poste téléphonique P3 via le port D. Réciproquement, lorsque le relais R est désactivé et que des signaux analogiques de téléphonie conventionnelle sont émis par le poste téléphonique P3, ces signaux sont reçus par la passerelle via le port D et traités par l'interface FXS puis par l'interface ADSL qui génèrent des signaux ADSL montants qui sont émis à destination du séparateur/mélangeur SPL via le port I. Le port D est alors un port FXS.

L'acheminement des ces signaux est schématiquement représenté sur la Fig. 8 par la flèche en italique référencée F3.

On peut noter que dans le cas où le relais R est désactivé, les signaux échangés entre le séparateur/mélangeur SPL et le port D peuvent être soit des signaux ADSL soit des signaux d'un service de téléphonie conventionnelle utilisant le réseau de téléphonie commuté (RTC).

De plus, des signaux de téléphonie conventionnelle peuvent être échangés entre un poste téléphonique P1 ou P2 et le centre téléphonique de raccordement selon le réseau commuté classique (RTC) et ce sans passer par la passerelle GW3 (flèche F4 sur la Fig. 9). L'acheminement des ces signaux est schématiquement représenté sur la Fig. 8 par la flèche en italique référencée F4.

Selon un mode de réalisation, les moyens pour déterminer l'état de dégroupage de la ligne LT comporte un moyen pour activer le relais R dès la première mise en service de la passerelle domestique GW3 sur l'installation domestique d'un abonné. Préférentiellement, le relais R est également par la suite activé cycliquement afin de vérifier si la ligne téléphonique LT est nouvellement dégroupée. Selon ce mode de réalisation, les moyens pour déterminer l'état de dégroupage de la ligne LT comportent également des moyens pour mesurer le niveau de la tension électrique sur la ligne téléphonique LT. En fonction du niveau de la tension mesuré, une décision est prise concernant le dégroupage de la ligne téléphonique LT. Dans le cas où aucun niveau de tension n'est mesuré, la ligne LT est déterminée comme étant dégroupée et dans le cas contraire où un niveau de tension électrique est mesuré la ligne LT est déterminée comme n'étant pas dégroupée.

Selon un mode de réalisation, la passerelle comporte un indicateur visuel LED de l'état de dégroupage de la ligne téléphonique LT. L'indicateur visuel LED est, par exemple, allumé lorsque la ligne LT est déterminée comme étant dégroupée et éteint dans le cas contraire.

Comme on l'a expliqué en relation avec la Fig. 4, la passerelle domestique GW3 comporte une impédance d'équilibrage interne de valeur prédéfinie, qui est égale, rappelons-le, à l'impédance équivalente théorique que l'ensemble ligne plus poste téléphonique présente à la ligne, et des amplificateurs à gains variables G1 et G2 tant en émission qu'en réception de valeurs de gains également prédéfinies.

Selon un mode de réalisation, la passerelle GW3 comporte un moyen pour modifier l'impédance d'équilibrage et les gains en émission G2 et en réception G1 selon les caractéristiques de la ligne téléphonique LT.

La Fig. 9 représente un schéma illustrant la modification de la valeur Zeq de l'impédance d'équilibrage et des gains G1 et G2 internes à la passerelle domestique GW3. Par la suite, la valeur de cette impédance, une fois modifiée selon la présente invention, est référencée ZeqM.

Le fait que la passerelle domestique GW3 soit connectée en parallèle à la ligne LT implique la prise en compte pour la définition préalable de la valeur Zeq de l'impédance d'équilibrage de l'impédance ZUF1 du filtre interne UF1, monté en série vis-à-vis de la ligne LT, de l'impédance ZUF2 des filtres externes UF2, montés en série vis-à-vis de la ligne LT ainsi que de l'impédance nominale ZT d'un poste téléphonique P1 (ou P2) monté en parallèle vis-à-vis de la ligne LT.

De plus, la connexion parallèle à la ligne de la passerelle domestique GW3 implique que l'impédance ZLT de la ligne LT a une influence sur l'impédance équivalente vue d'un port FXS, c'est-à-dire sur l'adaptation en impédance entre la passerelle et un poste téléphonique et sur la minimisation de l'écho local.

Selon un mode de réalisation, le moyen pour modifier la valeur Zeq de l'impédance d'équilibrage et les gains G1 et G2 permet d'obtenir la longueur de la partie de la ligne LT reliant le séparateur/mélangeur SPL au port I de la passerelle GW3.

L'impédance de la passerelle présentée à la ligne LT, initialement égale à la valeur Zeq calculée en prenant en compte les filtres internes et externes ainsi que l'impédance ZT du poste téléphonique est alors modifiée selon la longueur de la partie de la ligne LT ainsi obtenue et les caractéristiques de la ligne LT qui sont connues au préalable de la passerelle GW3. Pour cela, la valeur modifiée ZeqM de l'impédance d'équilibrage est définie comme étant une impédance résultante de la mise en parallèle de l'impédance de valeur Zeq avec l'impédance ZLT de la ligne LT qui est définie à partir de la connaissance des caractéristiques de la ligne LT et de sa longueur ainsi obtenue.

Selon un mode de réalisation relatif au cas où la passerelle GW3 est raccordée par un lien xDSL (ADSL ou VDSL2 par exemple) au séparateur/mélangeur SPL, la longueur de la partie de la ligne LT est déterminée à partir de résultats de calcul d'affaiblissement de la partie de la ligne LT reliant le séparateur/mélangeur et le port I. Ce type de calcul d'affaiblissement est préférentiellement effectué par un module de l'interface ADSL (et plus généralement xDSL) de la passerelle lors d'une phase négociée de synchronisation entre la passerelle GW3 et l'équipement réseau DSLAM distant, phase destinée à déterminer les meilleures conditions d'établissement de la liaison entre le port I et le séparateur/mélangeur SPL en terme de débit montant et descendant et de marges aux bruits. Ces calculs, réalisés par un module de gestion interne à la passerelle GW3 (non représenté), sont faits par échanges de signaux particuliers avant que la synchronisation de la passerelle GW3 ne soit complètement établie. Ce module de gestion peut donc lors de cette phase de synchronisation connaître l'atténuation de la ligne, en déduire la longueur de la ligne LT puis l'impédance ZLT de cette ligne à partir de la connaissance *a priori* des caractéristiques de la ligne LT et en déduire ainsi l'impédance de charge réelle vue par l'interface FXS.

Selon un autre mode de réalisation, la longueur de la partie de la ligne LT est connue d'un équipement de gestion distant qui est accessible par la passerelle GW3. La passerelle GW3 comporte alors un moyen pour obtenir la longueur de la partie de la ligne LT de l'équipement de gestion distant, préférentiellement lors de l'initialisation de la passerelle et en variante suite à une requête de la passerelle.

Selon un mode de réalisation, le moyen pour modifier la valeur de l'impédance d'équilibrage et des gains G1 et G2 sont des instructions d'un programme implémenté au sein de la passerelle tel que par un moyen du bloc SLIC et ou COD de l'interface FXS ou par le calculateur dédié de signaux numériques DSP.

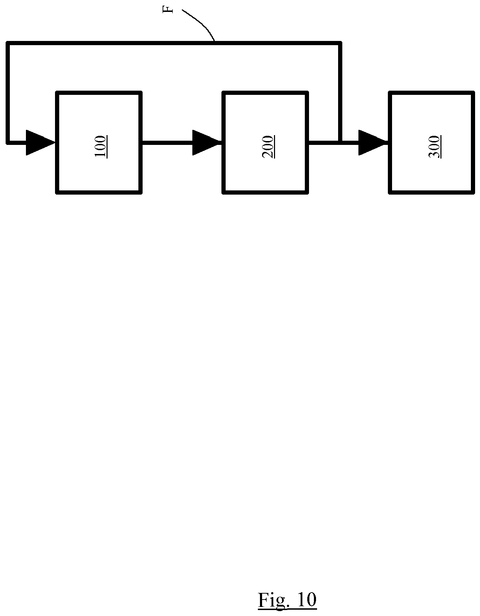

Selon un autre de ses aspects, l'invention concerne un procédé de configuration d'une passerelle domestique GW3 décrit en relation avec la Fig. 10. Ce procédé comporte une étape 100 de détermination de l'état de dégroupage de la ligne téléphonique LT, suivie d'une étape 200, dite de ré-injection conditionnelle, au cours de laquelle dans le cas où la ligne LT est déterminée comme étant dégroupée un moyen interne à la passerelle, en l'occurrence le relais R, est activé pour que les signaux de téléphonie conventionnelle issus de signaux numériques de type ADSL soient échangés avec le poste téléphonique P1 ou P2 via le port I, et dans le cas où la ligne LT est déterminée comme n'étant pas dégroupée, ledit moyen interne est désactivé pour que lesdits signaux de téléphonie conventionnelle soient échangés avec ledit poste téléphonique via un port D.

Selon un mode de réalisation du procédé, les étapes 100 et 200 sont exécutées lors de la première utilisation de la passerelle et selon une variante la succession des étapes 100 et 200 est réalisée par la suite cycliquement. L'exécution cyclique de la succession des étapes 100 et 200 est schématiquement représentée sur la Fig. 10 par une flèche F.

Selon un mode de réalisation, au cours de l'étape 100 de détermination de l'état de dégroupage de la ligne téléphonique LT, le relais R est activé et une tension électrique sur la ligne téléphonique LT est mesurée. La ligne LT est déterminée comme étant dégroupée si aucun niveau de tension n'est mesuré. Au contraire, si un niveau de tension est mesuré sur la ligne LT, la ligne est déterminée comme n'étant pas dégroupée.

Selon une autre caractéristique, dans le cas où la ligne LT a été déterminée comme étant dégroupée, le procédé comporte une étape 300 de modification de la valeur de l'impédance d'équilibrage et des gains G1 et G2 selon les caractéristiques de la partie de la ligne téléphonique LT reliant le séparateur/mélangeur SPL et le port I.

Selon un mode de réalisation, au cours de ladite étape 300 de modification de la valeur de l'impédance d'équilibrage et des gains G1 et G2, la longueur de la partie de la ligne LT reliant l'équipement réseau, en l'occurrence le séparateur/mélangeur SPL, du port I de la passerelle est obtenue, et la valeur de l'impédance d'équilibrage et les gains G1 et G2 sont alors modifiés selon la longueur de ladite partie de la ligne LT ainsi obtenue.

Selon un mode de réalisation, la longueur de la partie de la ligne LT est déterminée à partir de résultats de calcul d'affaiblissement donné par la partie de ladite ligne téléphonique reliant ledit équipement réseau et ledit premier port, résultats obtenus préférentiellement lors d'une phase de synchronisation entre la passerelle et ledit équipement réseau, en l'occurrence le séparateur/mélangeur SPL.

Selon un autre mode de réalisation, la longueur de la partie de la ligne LT étant connue d'un équipement de gestion distant qui est accessible par la passerelle GW3, la longueur de la partie de la ligne LT est obtenue à partir dudit équipement distant, préférentiellement lors de l'initialisation de la passerelle et en variante suite à une requête de la passerelle.

**Revendications**

1. Passerelle domestique connectée à une ligne téléphonique conventionnelle, ladite passerelle étant prévue pour recevoir sur l'un de ses ports, dit premier, des signaux numériques émis via ladite ligne téléphonique conventionnelle par un équipement réseau dans une bande de fréquences déterminée et pour émettre sur ledit premier port et à destination dudit équipement réseau des signaux numériques dans une autre bande de fréquences déterminée, la passerelle comportant en interne une impédance d'équilibrage présentée à la ligne de valeur prédéfinie et des amplificateurs à gains variables destinés à amplifier les signaux tant en émission qu'en réception, lesdits gains ayant des valeurs prédéfinies, **caractérisée en ce qu'**elle comporte des moyens pour déterminer que la ligne téléphonique est dégroupée et un moyen pour modifier ladite valeur de l'impédance d'équilibrage et des gains desdits amplificateurs selon les caractéristiques de ladite ligne téléphonique lorsque la ligne a été préalablement déterminée comme étant dégroupée.

2. Passerelle domestique selon la revendication 2, dans laquelle ledit moyen pour modifier la valeur de ladite impédance d'équilibrage et des gains desdits amplificateurs permet d'obtenir la longueur de la partie de la ligne reliant ledit équipement réseau audit premier port de la passerelle, la valeur de ladite impédance d'équilibrage et des gains desdits amplificateurs étant alors modifiée selon la longueur de la partie de la ligne ainsi obtenue.

3. Passerelle domestique selon la revendication 2, dans laquelle la longueur de la partie de la ligne est déterminée à partir de résultats de calcul d'affaiblissement donné par la partie de ladite ligne téléphonique reliant ledit équipement réseau et ledit premier port, résultats obtenus préférentiellement lors d'une phase de synchronisation entre la passerelle et ledit équipement réseau.

4. Passerelle domestique selon la revendication 2, la longueur de la partie de la ligne téléphonique étant connue d'un équipement de gestion distant qui est accessible par la passerelle, **caractérisée en ce qu'**elle comporte un moyen pour obtenir la longueur de la partie de la ligne (LT) de l'équipement de gestion distant, préférentiellement lors de l'initialisation de la passerelle et en variante suite à une requête de la passerelle.

5. Passerelle domestique selon l'une des revendications 2 à 4, dans laquelle ledit moyen pour modifier la valeur de ladite impédance d'équilibrage et les gains desdits amplificateurs sont des instructions d'un programme implémenté au sein de la passerelle.

6. Passerelle domestique selon la revendication 5, ladite passerelle comportant une interface (FXS) mettant en oeuvre des moyens pour assurer les fonctions classiques de téléphonie conventionnelle et un calculateur dédié de signaux numériques (DSP), ledit programme est implémenté soit par l'un desdits moyens de l'interface (FXS) soit par ledit calculateur.

7. Procédé de configuration d'une passerelle domestique connectée à une ligne téléphonique, ladite passerelle étant prévue pour recevoir sur l'un de ses ports, dit premier, des signaux numériques émis via ladite ligne téléphonique conventionnelle par un équipement réseau dans une bande de fréquences déterminée et pour émettre sur ledit premier port et à destination dudit équipement réseau des signaux numériques dans une autre bande de fréquences déterminée, la passerelle comportant en interne une impédance d'équilibrage présentée à la ligne de valeur prédéfinie et des amplificateurs à gains variables destinés à amplifier les signaux tant en émission qu'en réception, les gains desdits amplificateurs ayant des valeurs prédéfinies, **caractérisé en ce qu'**il comporte une étape (300) de modification de la valeur de ladite impédance d'équilibrage et des gains desdits amplificateurs selon les caractéristiques de la ligne téléphonique, étape qui n'est exécutée que lorsque la ligne a été préalablement déterminée comme étant dégroupée.

8. Procédé selon la revendication 7, dans lequel au cours de ladite étape de modification de ladite impédance d'équilibrage et des gains desdits amplificateurs, la longueur de la partie de la ligne reliant ledit équipement réseau audit premier port de la passerelle est obtenue, et la valeur de ladite impédance d'équilibrage et les gains desdits amplificateurs sont modifiés selon la longueur de la partie de la ligne ainsi obtenue.

9. Procédé selon la revendication 8, dans lequel la longueur de la partie de la ligne est déterminée à partir de résultats de calcul d'affaiblissement donné par la partie de ladite ligne téléphonique reliant ledit équipement réseau et ledit premier port, résultats obtenus préférentiellement lors d'une phase de synchronisation entre la passerelle et ledit équipement réseau.

10. Procédé selon la revendication 8, la longueur de la partie de la ligne étant connue d'un équipement de gestion distant qui est accessible par la passerelle, la longueur de la partie de la ligne téléphonique est obtenue à partir dudit équipement distant, préférentiellement lors de l'initialisation de la passerelle et en variante suite à une requête de la passerelle.

11. Programme d'ordinateur stocké sur un support d'informations, ledit programme comportant des instructions permettant de mettre en oeuvre le procédé selon l'une des revendications 7 à 10, lorsqu'il est chargé et exécuté par une passerelle domestique conforme à l'une des revendications 1 à 6.

**Patentansprüche**

1. Home-Gateway, das mit einer konventionellen Telefonleitung verbunden ist, wobei das Gateway vorgesehen ist, um an einem seiner Ports, erster genannt, digitale Signale zu empfangen, die von einer Netzausrüstung in einem bestimmten Frequenzband über die konventionelle Telefonleitung gesendet werden, und um auf dem ersten Port und an die Netzausrüstung digitale Signale in einem anderen bestimmten Frequenzband zu senden, wobei das Gateway intern eine der Leitung präsentierte Ausgleichsimpedanz von vordefiniertem Wert und Verstärker mit variablen Verstärkungen aufweist, die dazu bestimmt sind, die Signale sowohl beim Senden als auch beim Empfang zu verstärken, wobei die Verstärkungen vordefinierte Werte haben, **dadurch gekennzeichnet, dass** es Einrichtungen, um zu bestimmen, dass die Telefonleitung entbündelt ist, und eine Einrichtung enthält, um den Wert der Ausgleichsimpedanz und der Verstärkungen der Verstärker gemäß den Merkmalen der Telefonleitung zu ändern, wenn die Leitung vorab als entbündelt bestimmt wurde.

2. Home-Gateway nach Anspruch 2, wobei die Einrichtung zum Ändern des Werts der Ausgleichsimpedanz und der Verstärkungen der Verstärker es ermöglicht, die Länge des Teils der Leitung zu erhalten, der die Netzausrüstung mit dem ersten Port des Gateways verbindet, wobei der Wert der Ausgleichsimpedanz und der Verstärkungen der Verstärker dann gemäß der so erhaltenen Länge des Teils der Leitung geändert wird.

3. Home-Gateway nach Anspruch 2, wobei die Länge des Teils der Leitung ausgehend von Berechnungsergebnissen einer gegebenen Dämpfung durch den Teil der Telefonleitung bestimmt wird, der die Netzausrüstung und den ersten Port verbindet, Ergebnisse, die vorzugsweise während einer Synchronisationsphase zwischen dem Gateway und der Netzausrüstung erhalten werden.

4. Home-Gateway nach Anspruch 2, wobei die Länge des Teils der Telefonleitung einer fernen Verwaltungsausrüstung bekannt ist, die für das Gateway zugänglich ist, **dadurch gekennzeichnet, dass** es eine Einrichtung aufweist, um die Länge des Teils der Leitung (LT) von der fernen Verwaltungsausrüstung zu erhalten, vorzugsweise bei der Initialisierung des Gateways und in einer Variante nach einer Anforderung des Gateways.

5. Home-Gateway nach einem der Ansprüche 2 bis 4, wobei die Einrichtung zum Ändern des Werts der Ausgleichsimpedanz und der Verstärkungen der Verstärker Anweisungen eines Programms sind, das in das Gateway implementiert ist.

6. Home-Gateway nach Anspruch 5, wobei das Gateway eine Schnittstelle (FXS), die Einrichtungen verwendet, um die klassischen Funktionen konventioneller Telefonie zu gewährleisten, und einen dedizierten Rechner digitaler Signale (DSP) aufweist, das Programm entweder von einer der Einrichtungen der Schnittstelle (FXS) oder vom Rechner implementiert wird.

7. Verfahren zur Konfiguration eines mit einer Telefonleitung verbundenen Home-Gateways, wobei das Gateway vorgesehen ist, um auf einem seiner Ports, erster genannt, digitale Signale zu empfangen, die von einer Netzausrüstung in einem bestimmten Frequenzband über die konventionelle Telefonleitung gesendet werden, und um auf dem Port und an die Netzausrüstung digitale Signale in einem anderen bestimmten Frequenzband zu senden, wobei das Gateway intern eine der Leitung präsentierte Ausgleichsimpedanz vordefinierten Werts und Verstärker mit variablen Verstärkungen aufweist, die dazu bestimmt sind, die Signale sowohl beim Senden als auch beim Empfang zu verstärken, wobei die Verstärkungen der Verstärker vordefinierte Werte haben, **dadurch gekennzeichnet, dass** es einen Schritt (300) der Änderung des Werts der Ausgleichsimpedanz und der Verstärkungen der Verstärker gemäß den Merkmalen der Telefonleitung aufweist, Schritt, der nur ausgeführt wird, wenn die Leitung vorher als entbündelt bestimmt wurde.

8. Verfahren nach Anspruch 7, wobei während des Schritts der Änderung der Ausgleichsimpedanz und der Verstärkungen der Verstärker die Länge des Teils der Leitung, der die Netzausrüstung mit dem ersten Port des Gateways verbindet, erhalten wird, und der Wert der Ausgleichsimpedanz und der Verstärkungen der Verstärker gemäß der so erhaltenen Länge des Teils der Leitung geändert wird.

9. Verfahren nach Anspruch 8, wobei die Länge des Teils der Leitung ausgehend von Berechnungsergebnissen einer gegebenen Dämpfung durch den Teil der Telefonleitung bestimmt wird, der die Netzausrüstung und den ersten Port verbindet, Ergebnisse, die vorzugsweise während einer Synchronisationsphase zwischen dem Gateway und der Netzausrüstung erhalten werden.

10. Verfahren nach Anspruch 8, wobei die Länge des Teils der Leitung einer fernen Verwaltungsausrüstung bekannt ist, die für das Gateway zugänglich ist, die Länge des Teils der Telefonleitung ausgehend von der fernen Ausrüstung erhalten wird, vorzugsweise bei der Initialisierung des Gateways und in einer Variante nach einer Anforderung des Gateways.

11. Computerprogramm, das auf einem Informationsträger gespeichert ist, wobei das Programm Anweisungen aufweist, die es ermöglichen, das Verfahren nach einem der Ansprüche 7 bis 10 anzuwenden, wenn es von einem Home-Gateway nach einem der Ansprüche 1 bis 6 geladen und ausgeführt wird.

**Claims**

1. Home gateway connected to a conventional telephone line, said gateway being intended to receive, on one of its ports, termed first port, digital signals sent via said conventional telephone line by a network device in a given frequency band and to send, on said first port, to said network device, digital signals in another given frequency band, the gateway internally including a balancing impedance, presented to the line, with a predefined value and variable-gain amplifiers that are intended to amplify the signals both on sending and on reception, said gains having predefined values, **characterized in that** it includes means for determining that the telephone line is unbundled and a means for modifying said value of the balancing impedance and of the gains of said amplifiers depending on the features of said telephone line when the line has been determined beforehand as being unbundled.

2. Home gateway according to Claim 2, wherein said means for modifying the value of said balancing impedance and of the gains of said amplifiers makes it possible to acquire the length of the portion of the line linking said network device to said first port of the gateway, the value of said balancing impedance and of the gains of said amplifiers then being modified depending on the length of the portion of the line thus acquired.

3. Home gateway according to Claim 2, wherein the length of the portion of the line is determined on the basis of results of calculating the attenuation given by the portion of said telephone line linking said network device and said first port, results preferably acquired during a phase of synchronization between the gateway and said network device.

4. Home gateway according to Claim 2, the length of the portion of the telephone line being known to a remote management device that is able to be accessed by the gateway, **characterized in that** it includes a means for acquiring the length of the portion of the line (LT) from the remote management device, preferably when the gateway is started up, and, as a variant, following a request from the gateway.

5. Home gateway according to one of Claims 2 to 4, wherein said means for modifying the value of said balancing impedance and the gains of said amplifiers are instructions of a program implemented within the gateway.

6. Home gateway according to Claim 5, said gateway including an interface (FXS) implementing means for providing the traditional functions of conventional telephony and a dedicated digital signal processor (DSP), said program is implemented either by one of said means of the interface (FXS) or by said processor.

7. Method for configuring a home gateway connected to a telephone line, said gateway being intended to receive, on one of its ports, termed first port, digital signals sent via said conventional telephone line by a network device in a given frequency band and to send, on said first port, to said network device, digital signals in another given frequency band, the gateway internally including a balancing impedance, presented to the line, with a predefined value and variable-gain amplifiers that are intended to amplify the signals both on sending and on reception, the gains of said amplifiers having predefined values, **characterized in that** it includes a step (300) of modifying the value of said balancing impedance and of the gains of said amplifiers depending on the features of the telephone line, which step is executed only when the line has been determined beforehand as being unbundled.

8. Method according to Claim 7, wherein, during said step of modifying said balancing impedance and the gains of said amplifiers, the length of the portion of the line linking said network device to said first port of the gateway is acquired, and the value of said balancing impedance and the gains of said amplifiers are modified depending on the length of the portion of the line thus acquired.

9. Method according to Claim 8, wherein the length of the portion of the line is determined on the basis of results of calculating the attenuation given by the portion of said telephone line linking said network device and said first port, results preferably acquired during a phase of synchronization between the gateway and said network device.

10. Method according to Claim 8, the length of the portion of the line being known to a remote management device that is able to be accessed by the gateway, the length of the portion of the telephone line is acquired from said remote device, preferably when the gateway is started up, and, as a variant, following a request from the gateway.

11. Computer program stored on an information carrier, said program including instructions enabling the method according to one of Claims 7 to 10 to be implemented when it is loaded and executed by a home gateway according to one of Claims 1 to 6.

Fig. 1

Fig. 2

Fig. 3

Fig. 4

Fig. 5

Fig. 6

Fig. 7

Fig. 8

Fig. 9

Fig. 10

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2856216 A